# EUROPEAN PATENT SPECIFICATION

(11) **EP 0 487 102 B1**
(45) Date of publication and mention of the grant of the patent: **02.08.1995**
(21) Application number: 91119959.4
(22) Date of filing: 22.11.1991
(51) Int. Cl.: B01D 53/34

(54) **Recycling system for the recovery and utilization of CO2 gas**
System für die Rückgewinnung und Verwendung von CO2-Gas
Système pour la récupération et utilisation de gaz CO2

(30) Priority: 22.11.1990 JP 318443/90
(43) Date of publication of application: 27.05.1992
(73) Proprietor: HITACHI, LTD., Chiyoda-ku, Tokyo 101 (JP)
(72) Inventor: Mori, Toshikatsu, Hitachi-shi, Ibaraki-ken (JP); Yamashita, Hisao, Hitachi-shi, Ibaraki-ken (JP); Miyadera, Hiroshi, Hitachi-shi, Ibaraki-ken (JP); Kuroda, Osamu, Hitachi-shi, Ibaraki-ken (JP)
(74) Representative: Beetz & Partner Patentanwälte

(56) References cited:
- EP-A- 0 079 207
- WO-A-90/09225
- DE-A- 3 325 140
- FR-A- 2 620 351
- US-A- 3 660 023
- US-A- 4 430 312
- US-A- 4 477 419
- US-A- 4 510 124
- PATENT ABSTRACTS OF JAPAN, vol. 9, no. 200 (C-298)[1923], 16th August 1985,page 79-C-298; & JP-A-60 68 033 (ISHIKAWAJIMA HARIMA JUKOGYO K.K.) 18-04-1985
- PATENT ABSTRACTS OF JAPAN, vol. 15, no. 472 (C-889)[5000), 29th November 1991,page 9-C-889; & JP-A-3 200 734 (MITSUBISHI HEAVY IND., LTD.) 02-09-1991
- DATABASE WPIL, accession no. 91-012475 [02], Derwent Publications Ltd, London,GB; & JP-A-2 286 839 (AGENCY OF IND. SCI. TECH.) 26-11-1990

## Description

This invention relates to a method and an apparatus which recover and utilize CO₂ gas contained in flue gas such as combustion gas, thereby reducing the quantity of CO₂ gas emitted into the atmosphere and hence contributing to the solution to the green house effect.

In recent years, the green house effect caused by CO₂ gas has become a worldwide problem and countries everywhere are working together to find solutions. Those proposed so far can roughly be classified into the following approaches: (1) the promotion of energy saving, (2) the development and introduction of new energy; and (3) the fixation and utilization of CO₂ gas. The present invention relates to the third approach.

As a method for the fixation and utilization of CO₂ gas, what may be conceived, for example, is to separate and concentrate CO₂ gas, exhausted as the combustion gas of fossil fuel, and then to reduce it into various substances such as methane and methanol.

A process has been proposed for the separation and concentration of CO₂ gas, in which CO₂ gas is absorbed in an alkaline solution such as monoethanolamine or a potassium carbonate solution and the resulting solution is then heated to release CO₂ gas. Moreover, monoethanolamine is prone to decomposition and substantial thermal energy is required to heat the CO₂-absorbing solution. The above process is therefore accompanied by potential problems such that energy consumption may be increased, offensive odor may be generated by the product of decomposition and deleterious effects may arise with the processing state, i.e., the CO₂ gas reduction. There is a still further disadvantage that the above absorbents are both strongly corrosive. In addition, when the combustion gas also contains acid gas such as sulfurous acid gas, the acid gas firmly bonds to the absorbent so that CO₂ gas cannot be separated and recovered easily. The absorbent therefore loses its effectiveness rapidly. Accordingly, the above conventional process cannot be applied in this case.

In addition, another process using an adsorbent such as zeolite has also been proposed for the separation and concentration of CO₂ gas. In this process, the adsorption of CO₂ gas is inhibited by oxygen and steam, which are also contained in the combustion gas. For an adsorption reaction, lower temperatures are desirable. The temperature of flue gas is, however, generally 100 °C or higher, leading to the drawback that a large adsorption tower is required. Moreover, when CO₂ gas contains acid gas such as sulfurous acid gas, the acid gas firmly bonds to the adsorbent, thereby gradually reducing the CO₂-absorbing capacity of the adsorbent. In this case, the above conventional process cannot be applied, either.

Moreover, the reduction of CO₂ gas requires considerable energy input because CO₂ gas is stable. Some attempts have been made to utilize solar energy for the above purpose. In an illustrative system in which CO₂ gas is reduced with hydrogen in the presence of a photocatalyst to convert it to methanol or methane, however, the energy utilization rate is as low as about 0.1 %. Such a low efficiency of energy conversion can be attributed to the following causes: (1) A photocatalyst can absorb only light not longer than 420 nm in wavelength so that light in the visible to infrared range is not utilized. (2) No practical catalyst has yet been developed for the acceleration of the reduction reaction of CO₂ gas with hydrogen.

Techniques known in the above-mentioned type of field, for example, separation and concentration techniques for CO₂ gas by an absorbing solution, include those disclosed in JP-A-59010330 or the corresponding US-A-4 430 312 or in JP-A-59169920 corresponding to US-A-4 477 419.

FR-A-2620351 refers to a method for the treatment of flue gas containing CO₂ gas and SOx gas, which comprises bringing the flue gas into contact with ash as an absorbent which contains an alkaline earth metal compound in order to recover the CO₂ gas and SOx gas as the carbonate and sulfite, respectively, of the alkali earth metal.

US-A-3 660 023 discloses a process for recovery of pure carbon dioxide from stock gases containing CO₂ and SOx gas, which comprises bringing the stock gas into contact with an absorbent containing an alkaline earth metal compound in order to recover the SOx as the sulfite of the alkaline earth metal and the CO₂ as the carbonate.

According to US-A-4 510 124 flue gas containing carbon dioxide and SOx is treated with an absorbent in order to recover carbon dioxide as the carbonate and the Sox as the sulfate.

With the foregoing problems of the related art in mind, the present inventors have developed the present invention.

It is the object of this invention to provide a method and an apparatus effective for reducing the SOx content and the quantity of CO₂ gas emitted from a fossil fuel burning facility, such as a thermal power plant, and to recycle CO₂ gas as fuel.

These objects are accomplished according to the present invention with a method and an apparatus according to claims 1 and 13, respectively.

Dependent claims are directed on features of preferred embodiments of the invention.

In one aspect of this invention, there is thus provided a method for the treatment of flue gas containing CO₂ gas and SOx gas, which comprises bringing the flue gas into contact with an absorbent which contains an alkaline earth metal compound, in order to recover the CO₂ gas and SOx gas as the carbonate and sulfite respectively of the alkali earth metal.

Examples of flue gas include the combustion gases of fossil fuel emitted from thermal power plants and the like. Fossil fuel and the like contain carbon and sulfur as components so that their combustion gases contain CO₂ gas and SOx gases such as sulfurous acid gas.

Upon recovery of the carbonate and the sulfite, it is preferable to control the feed quantity of the absorbent so that the reaction system can be maintained at a pH where at least one of the compounds, either the carbonate or the sulfite, is present in a solid form.

The carbonate of the alkaline earth metal is separated from the sulfite and then decomposed into CO₂ gas and the alkaline earth metal compound, thereby making it possible to recover CO₂ gas and also to regenerate the alkaline earth metal compound into the absorbent.

In a further aspect of this invention, there is also provided a method for the regeneration of CO₂ gas, which comprises reducing CO₂ gas, which has been obtained according to the above aspect, with hydrogen to form a CO₂ reduction product such as a hydrocarbon, e.g. methane, or an oxygen-containing hydrocarbon, e.g. methanol. The CO₂ reduction product so obtained can be reused as fuel.

In a more specific aspect of this invention, there is provided a recycling process for the regeneration of CO₂ gas, which comprises the following steps: (1) an absorption step in which CO₂ gas in the combustion gas of fossil fuel is absorbed in a solution containing an alkaline earth metal compound; (2) a step in which CO₂ gas is recovered to regenerate the absorbent by decomposing the carbonate and/or bicarbonate of the absorbent formed in the absorption step; (3) a reduction step in which CO₂ gas thus recovered is reduced with hydrogen into a hydrocarbon or oxygen-containing hydrocarbon such as methane or methanol; and (4) a recirculation step in which the product of the reduction step is returned to a fossil fuel combustion furnace.

In a still further aspect of this invention, there is also provided a recycling system for the regeneration of CO₂ gas as a system to attain the objects described above. The recycling system comprises a means for bringing flue gas, which contains CO₂ gas and SOx gas, into contact with an absorbent containing an alkaline earth metal compound, thereby recovering CO₂ gas and SOx gas, as the carbonate and sulfite, respectiely, of the alkaline earth metal; a means for feeding the absorbent to the recovery means; a means for decomposing the carbonate of the alkaline earth metal, out of the carbonate of the alkaline earth metal and the sulfite of the alkaline earth metal, into CO₂ gas and the alkaline earth metal compound; and a means for reducing the resulting CO₂ gas with hydrogen, thereby producing a CO₂ reduction product for regeneration.

According to the present invention, the quantity of CO₂ gas to be discharged can be reduced using unlimited and clean solar energy while still operating existing thermal power systems. The present invention, therefore, can become a basic countermeasure against the green house effect.

### BRIEF DESCRIPTION OF THE DRAWINGS

The above and other objects, features and advantages of the present invention will become apparent from the following description and the appended claims taken along with the accompanying drawings, in which:
FIG.1 is a block diagram of a recycling system for the utilization of CO₂ gas according to one typical embodiment of the present invention; and
FIG.2 to FIG. 7 are block diagrams of recycling systems according to other embodiments of the present invention.

### DETAILED DESCRIPTION OF THE PREFERRED EMBODIMENTS

The means for recovering CO₂ gas and SOx gas is provided with at least one absorbing tower. This means may be constructed such that both CO₂ gas and SOx gas can be recovered in a common absorbing tower. This means can be equipped with two or more absorbing towers.

In the recycling system according to the present invention, it is preferable that a means for separating the carbonate of the alkaline earth metal and the sulfite of the alkaline earth metal from each other be installed. The absorbing tower itself may of course be constructed to achieve this separation too.

The absorbent-feeding means can reuse, as an absorbent, an alkaline earth metal compound obtained by decomposition.

The absorbent-feeding means may be equipped with a device for measuring the pH at a discharge port of the carbonate and the sulfite of the alkaline earth metal in the absorbing tower and with a feed controller for controlling the feed quantity of the absorbent. The absorbent-feeding means controls the feed quantity of the absorbent to maintain a pH at which at least one of the compounds, either the carbonate or the sulfite, is present in a solid form.

In the present invention, the carbonate may be either the carbonate or the bicarbonate.

As an absorbent, an alkaline earth metal compound can be used, with a calcium compound being especially preferred. As a calcium compound, it is preferable to select at least one compound from the group consisting of calcium carbonate, calcium oxide and calcium hydroxide. Minerals composed principally of at least one of the above compounds, such as limestone, can also be used. Incidentally, these compounds are used in a slurry form. The slurry concentration may be, for example, 2-30%, preferably 5-15%.

It is preferable to feed an absorbent in a quantity substantially equal to the stoichiometric quantity required for the conversion of sulfurous acid gas and CO₂ gas, which have been absorbed and removed from the flue gas, to calcium sulfite and calcium bicarbonate, respectively.

According to the method of the present invention, a slurry composed of calcium sulfite particles and a calcium bicarbonate solution can be obtained after the absorption step, whereby the separation of the bicarbonate from the sulfite or vice versa is very easy.

Upon attaining the conditions described above, it is desirable to control the feed quantity of the absorbent so that the pH of the absorbing solution is maintained at about 8-10 at the end of the absorption step.

As a heat source for the decomposition and reduction steps for the bicarbonate and the carbonate, the heat of the combustion gas and waste heat available inherently from the fossil fuel burning facility can be utilized.

Heat energy of about 100°C is necessary for the bicarbonate decomposition step, heat energy of about 900°C for the carbonate decomposition and heat energy of about 200-500°C for the CO₂ gas reduction step. Use of various waste heat as the above heat energy can enhance the effects of the present invention.

When calcium hydroxide is employed as an absorbent, it is preferable to feed the absorbent in a quantity substantially equal to the stoichiometric quantity required for the conversion of sulfurous acid gas and CO₂ gas, both absorbed and removed from flue gas, to calcium sulfite and calcium carbonate, respectively.

Use of calcium hydroxide in the method of the present invention can bring about a particularly high CO₂ absorbing capacity because, in addition to its high capacity to absorb CO₂ gas and sulfurous acid gas, the absorbing solution still has a CO₂-absorbing capacity when it is taken out from the absorption step.

Upon attaining the above conditions, the feed quantity of the absorbent is controlled so that the pH of the absorbing solution at the end of the absorption step is maintained, at about 10.5 or higher, preferably about 12.

Calcium sulfite and calcium carbonate are separated from their slurry obtained in the absorption step. Then calcium sulfite is oxidized into gypsum, while calcium carbonate is decomposed into calcium oxide and CO₂ gas. The resulting calcium oxide is hydrated into calcium hydroxide, which can be utilized again as an absorbent.

A mixed slurry of calcium sulfite and calcium carbonate, said mixed slurry having been obtained in the absorption step, is oxidized into a slurry of gypsum and calcium carbonate. Then, gypsum and calcium carbonate are separated. The resulting calcium carbonate is decomposed into calcium oxide and CO₂ gas, whereas calcium oxide is converted by hydration into calcium hydroxide, which can be used again as an absorbent.

In this method, calcium carbonate and gypsum are separated. There is a large difference in particle size between them (the particle size of gypsum is much larger) so that the separation in this step is easily facilitated. The separation can be conducted advantageously by a simple means such as a fluid cyclone. To oxidize calcium sulfite, ozone oxidation or oxidation by hydrogen peroxide is effective as well as air oxidation.

In the present invention, two absorbing towers may be employed, one for the absorption of sulfurous acid gas only and the other for the absorption of CO₂ gas only, whereby calcium sulfite is obtained from the former tower and calcium bicarbonate from the latter tower. In this case, the subsequent step of mutual separation of the sulfite and the bicarbonate can be omitted. As an alternative, it is also possible to design such that calcium sulfite and calcium carbonate are obtained from the former tower and the latter tower, respectively. This makes it unnecessary to separate the sulfite and the carbonate from each other.

As a further alternative, it may be possible to construct a single absorbing tower which has the functions of two towers, for example, by subjecting flue gas and an absorbing solution to countercurrent contact, obtaining calcium sulfite and calcium bicarbonate from a vertically-intermediate part of the absorbing tower and drawing calcium sulfite and calcium bisulfite from a bottom part of the tower.

As the reduction means, it is preferable to use a catalyst composed of at least one of alumina, silica and titania as a carrier component, at least one of nickel, iron, copper, chromium, zinc, ruthenium and palladium as an active component and at least one of lanthanum, cerium and yttrium as a cocatalyst component.

As conditions desirable for the reaction in the presence of the catalyst described above, a reaction temperature of 200-500°C and pressure of 1-50 atm. are desired. When methanol is produced, the catalyst may be free of any carrier.

To the solution or slurry of the absorbent, a metal complex such as ethylenediaminetetraacetic acid, citric acid or nitrilotriacetic acid can be added.

The addition of such a complex makes it possible to absorb NOx, thereby serving the further advantage of simultaneously removing the NOx.

The present invention permits the construction of a system wherein a boiler is provided to burn fossil fuel, the resulting flue gas is passed to the absorbing tower and the boiler uses as a part of its fuel a hydrocarbon or oxygen-containing hydrocarbon produced by the regeneration means described above. As an example, this system can be incorporated into a thermal power plant system.

A water electrolyzer is usable as a means for producing the hydrogen to be used in the reduction of CO₂ gas. As a power source for the electrolysis, a solar cell can preferably be employed.

Incidentally, there are other hydrogen-producing means. Those producing CO₂ gas together with hydrogen are contrary to the objects of this invention and are therefore not suitable.

The recycling system for the regeneration of CO₂ gas according to the present invention can be operated using electric power from a solar cell during daytime and any surplus power from the thermal power plant at night.

Taking by way of example a thermal power plant of 1 million kW generation capacity, one example of a simplified model of the recycling system for the regeneration of CO₂ gas will now be described.

In such a power plant, the discharge quantity of CO₂ gas is expected to be 455 t/h. Assuming that 91 t/h of the CO₂ gas, amounting to 20%, will be treated, the light-receiving area of a solar cell which is used to produce electric power for obtaining hydrogen by electrolysis, which will in turn be used for the reduction of CO₂ gas, may be about 5 million square meters at 10% energy conversion efficiency. Such a treatment will result in the production of 4.3 x 10³ kcal( 5 x 10⁵ kW) in the form of regenerated fuel.

Effects of the present invention, particularly effects of the absorbent, will hereinafter be described.

As described above, methods using an aqueous solution of an alkaline metal salt such as potassium carbonate or sodium carbonate as an absorbent for CO₂ gas have been known. The above absorbent is good for acid gases such as CO₂ gas and sulfurous acid gas, but a sulfite formed by the absorption of sulfurous acid gas and the sulfate formed by the oxidation of the sulfite does not have a CO₂-absorbing capacity and in addition, they are dissolved in water along with the bicarbonate formed by the absorption of the CO₂ gas. The sulfite and sulfate, therefore, cannot easily be separated from the bicarbonate.

One of features of the present invention resides in ingeniously utilizing characteristic properties of the carbonate, sulfite and sulfate of an alkaline earth metal to permit easy separation of the carbonate and/or the bicarbonate from the sulfite and/or the sulfate and also the regeneration of the absorbent from the carbonate and/or bicarbonate (production of concentrated CO₂ gas) or in the fact that conditions enabling the above-mentioned separation and regeneration have been selected for the absorption and regeneration of CO₂ gas by a calcium compound.

Upon absorption of CO₂ gas, calcium hydroxide first changes to calcium carbonate. Calcium carbonate then absorbs CO₂ gas to form calcium bicarbonate.

Ca(OH)₂ + CO₂ → CaCO₃ + H₂O (pH > 12)

CaCO₃ + CO₂ + H₂O → Ca(HCO₃)₂ (pH = 8-12)

At pH 8-12, both calcium carbonate and calcium bicarbonate exist. At pH 8 or lower, only calcium bicarbonate exists. Owing to the extremely low solubility of calcium carbonate, a large majority of calcium carbonate is present in a solid form. On the other hand, calcium bicarbonate exists in the form of a solution because of its high solubility. Their separation is therefore easy.

Sulfurous acid gas also contained in the combustion gas similarly reacts with a calcium salt.

Ca(OH)₂ + SO₂ → CaSO₃ + H₂O (pH > 8)

CaSO₃ + SO₂ + H₂O → Ca(HSO₃)₂ (pH = 6-8)

At pH 6-8, both calcium sulfite and calcium bisulfite exist. At pH 6 or lower, only calcium bisulfite exists. Owing to the extremely low solubility of calcium sulfite, a large majority of calcium sulfite exists in a solid form. On the other hand, calcium bisulfite exists in the form of a solution because of its high solubility. Accordingly, their separation is easy.

In a system in which calcium sulfite and calcium carbonate coexist, they are both in a solid (particulate) form at pH 10 or higher. They can, however, be separated according to the difference in particle size or specific gravity. At pH 8-10, the sulfite exists as calcium sulfite in a solid form, while the carbonate exists as calcium bicarbonate in the form of a solution. They can therefore be separated easily. At pH 8 or lower, calcium bicarbonate and calcium bisulfite coexist for the first time in a solution and, hence, it is difficult to separate them from each other.

Accordingly, a calcium salt formed by sulfurous acid gas and another calcium salt formed by CO₂ gas can be separated from each other when sulfurous acid gas and CO₂ gas are absorbed simultaneously by using a slurry of an alkaline earth metal compound, particularly, a calcium compound such as calcium hydroxide or calcium carbonate. The calcium salt formed by CO₂ gas can be decomposed to recover CO₂ gas at a high concentration and can also be regenerated as an absorbent.

The absorption step of the present invention has been designed in view of the properties of such an alkaline earth metal compound, particularly a calcium compound such as calcium hydroxide or calcium carbonate, for CO₂ gas and sulfurous acid gas.

Taking as an example the application of the present invention to the regeneration of CO₂ gas by its separation and recovery from combustion gas emitted from the boiler, the present invention will hereinafter be described in detail.

### [Example 1]

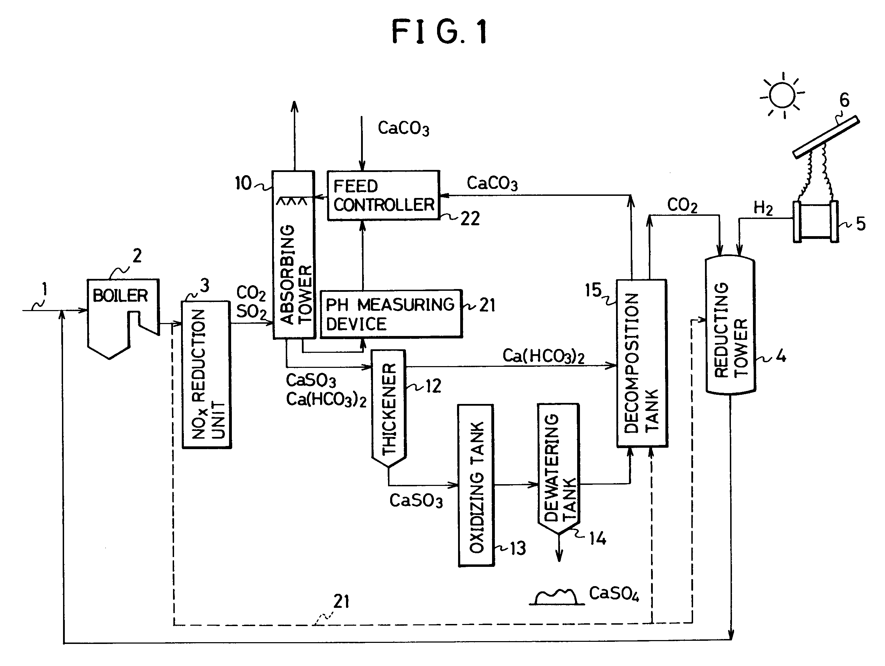

FIG. 1 is the block diagram showing the arrangement of the equipments in the CO₂ gas recycling system as one embodiment of the present invention.

This embodiment is equipped with a boiler 2 for burning fossil fuel 1, which is a fuel containing at least carbon as a component, such as coal or oil; a fuel gas treatment sub-system for subjecting the combustion gas from the boiler 2 to NOx reduction and also to desulfurization and decarbonization; and a reduction treatment sub-system in which CO₂ separated as a result of the carbonization is reduced. There are some differences in the construction of each of the sub-systems between this embodiment and subsequent embodiments, although they are principally the same. Basically, the following description is commonly applicable to the other embodiments which will be described later. Description of common functional components will therefore be omitted to avoid repetition as much as possible.

The flue gas treatment sub-system is equipped with an NOx reduction unit 3, which conducts NOx removal; an absorbing tower 10, which functions as a means for absorbing SOx, particularly SO₂, and also CO₂ gas; a thickener 12, which functions as a means for separating a solid component (calcium sulfite) and a liquid component (calcium bicarbonate) from each other, said components having been obtained in the absorbing tower 10; an oxidizing tank 13 which oxidizes calcium sulfite to form gypsum; a dewatering tank 14 which dewaters the resulting gypsum; and a decomposition tank 15 which functions as a means for decomposing calcium bicarbonate to obtain CO₂ gas.

Furthermore, the flue gas treatment sub-system has, as absorbent-feeding means, a pH measuring device 21 which measures the pH of the absorbing solution discharged from the absorbing tower 10 and a feed controller 22 which controls the feeding of calcium carbonate to the absorbing tower 10 according to the pH of the absorbing solution measured by the pH measuring device 21. The feed controller 22, although not illustrated in FIG.1, is equipped with a mixer which mixes a replenishing calcium carbonate slurry with a recycled calcium carbonate slurry from the reduction treatment sub-system which will be described below; a pump for supplying the mixed slurry to the absorbing tower 10; and a control unit which controls the mixer and the pump.

The absorbing tower 10 may be provided, if necessary, with a recirculating means (unillustrated), such as a pump, for the recirculation of the internal absorbing solution. Another pump or the like may also be provided, as needed, to discharge the absorbing solution to the outside.

The reduction sub-system comprises a reducing tower 4 in which CO₂ gas obtained in the decomposition tank 15 is subjected to reduction with hydrogen to produce a fuel such as methane; a water electrolyzer 5, which produces hydrogen to be used in the above reduction; and a solar cell 6, which functions as an electric source for supplying d.c. power to the water electrolyzer 5. Packed in the reducing tower 4 is a catalyst, that is, a catalyst composed of alumina as a carrier component, nickel as an active component and lanthanum as a cocatalyst component.

In the present embodiment, calcium carbonate obtained upon separation of CO₂ gas in the flue gas treatment sub-system is fed to the absorbing tower 10 for reuse. On the other hand, methane or the like obtained in the reduction sub-system is fed to the boiler 2 for reuse.

The operation of each sub-system of the system according to this embodiment will hereinafter be described.

Combustion gas, which has been formed by burning fossil fuel 1 in the boiler 2, is subjected to NOx removal in the NOx reduction unit 3 as needed, and the resulting flue gas containing sulfurous acid gas and CO₂ gas is introduced into the absorbing tower 10. In the absorbing tower 10, the flue gas is brought into contact with a calcium carbonate slurry, which serves as an absorbent, to allow the absorbent to absorb both the sulfurous acid gas and the CO₂ gas. The flue gas from which both the gases have been removed is then discharged from the absorbing tower 10.

In the absorbing tower 10, an absorbing solution (slurry) containing calcium sulfite and calcium bicarbonate is obtained by controlling the feed quantity of the absorbent. The feed quantity is controlled to bring the flue gas into contact with the absorbent in a quantity substantially equal to the stoichiometric quantity required for the conversion of sulfurous acid gas and CO₂ gas, which are to be absorbed and removed from the flue gas, to calcium sulfite and calcium bicarbonate, respectively. In practice, the pH of the absorbing solution is measured by the pH measuring device 21 and, based on the measuring result, the feed quantity of the absorbent is controlled by the feed control unit 22 so that the pH of the absorbing solution is maintained at about 8.

The absorbing solution is separated in the thickener 12 into solid calcium sulfite and a calcium bicarbonate solution. In the oxidizing tank 13, the calcium sulfite is oxidized with air or the like into gypsum, which is then discharged from the system after having been dewatered in the dewatering tank 14.

On the other hand, the resulting calcium bicarbonate solution is introduced into the decomposition tank 15, where it is decomposed into CO₂ gas and calcium carbonate. The decomposition of the solution is conducted under heat and the resulting calcium carbonate is returned as an absorbent to the absorbing tower 10 together with fresh calcium carbonate which is fed additionally. The thermal decomposition requires a temperature of about 100°C. The flue gas can be used as the heat source for this process.

The decomposition of calcium bicarbonate can be conducted by changing a gypsum-forming mother liquor as needed. In this case, gypsum is produced together with CO₂ gas. Gypsum is fed to the absorbing tower together with calcium carbonate, and then discharged from the system with the gypsum produced above by the oxidation of calcium sulfite.

Highly-concentrated CO₂ gas formed in the decomposition tank 15 is introduced into the reducing tower 4, and is converted to methane, methanol or the like with hydrogen obtained by hydrolysis in the water electrolyzer 5 using, for example, electric power from the solar cell 6. The reduction product is used as fuel for the boiler.

### [Example 2]

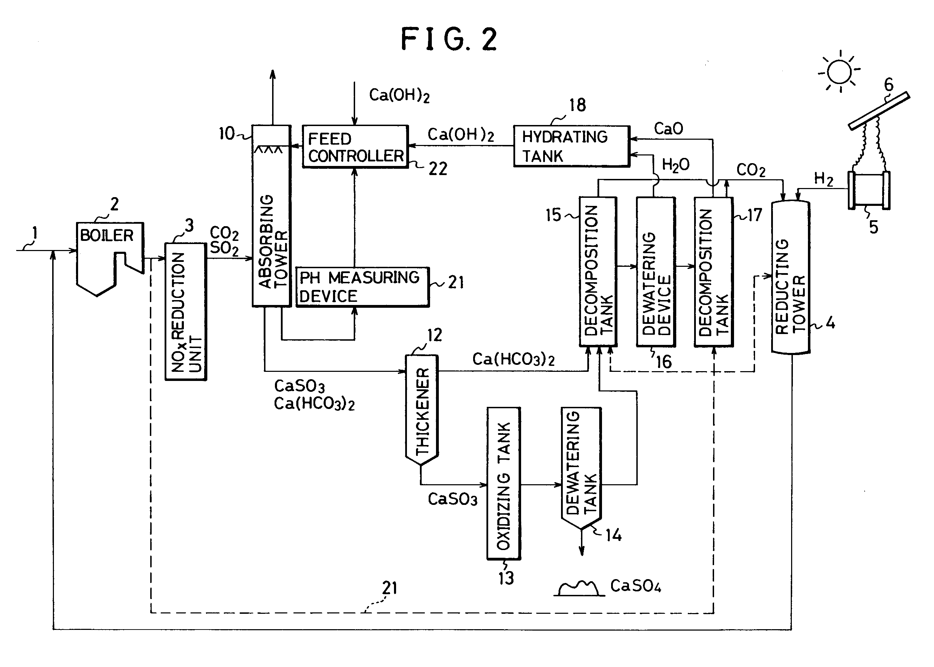

FIG. 2 is a block diagram of a CO₂ gas recycling system according to another embodiment of the present invention.

This embodiment is different from the embodiment of Example 1 in the employment of calcium hydroxide as an absorbent in the flue gas treatment sub-system. Namely, the flue gas treatment sub-system of this embodiment comprises, in addition to the units of the embodiment of Example 1, a dewatering device 16 which removes water from calcium carbonate formed in the decomposition tank 15; another decomposition tank 17, in which the dewatered calcium carbonate is heated and decomposed to obtain CO₂ gas and calcium oxide; and a hydrating tank 18 in which the calcium oxide formed in the decomposition tank 17 is hydrolyzed with water obtained in the dewatering device 16 to produce calcium hydroxide. The dewatering device 16, decomposition tank 17 and hydrating tank 18 are all installed after the decomposition tank 15. Incidentally, the CO₂ gas obtained in the decomposition tanks 15 and 17 is introduced into the reducing tower 4.

The operation of each sub-system of the system according to this example will hereinafter be described.

In FIG. 2, flue gas containing sulfurous acid gas and CO₂ gas is, in the absorbing tower 10, brought into contact with a calcium hydroxide slurry, which serves as an absorbent, to remove sulfurous acid gas and CO₂ gas. Similarly to Example 1, an absorbing solution (slurry) containing calcium sulfite and calcium bicarbonate is obtained from the absorbing tower 10 by controlling the feed quantity of the absorbent. Namely, the feed quantity of the absorbent is controlled so that the flue gas can be brought into the absorbent in a quantity substantially equal to the stoichiometric quantity required to convert sulfurous acid gas and CO₂ gas, which are to be absorbed and removed from the flue gas, to calcium sulfite and calcium bicarbonate, respectively. In practice, the pH of the absorbing solution is measured by the pH measuring device 21, and the feed quantity of the absorbent is controlled by the feed control unit 22 so that the pH of the absorbing solution is maintained at about 8.

The absorbing solution is likewise separated, in the thickener 12, into solid calcium sulfite and a calcium bicarbonate solution. Calcium sulfite is oxidized into gypsum with air or the like in the oxidizing tank 13. The gypsum is then discharged from the system after having been dewatered in the dewatering tank 14. The resulting calcium bicarbonate solution is, on the other hand, introduced into the decomposition tank 15, in which it is thermally decomposed into CO₂ gas and calcium carbonate or, if a gypsum-forming mother liquor is added as needed, into CO₂ gas and gypsum.

The above procedures are conducted in a similar manner to Example 1, except that slaked lime is used as an absorbent.

In this example, calcium carbonate produced in the decomposition step is dewatered by the dewatering device 16, followed by the thermal decomposition into CO₂ gas and calcium oxide in the decomposition tank 17. The resulting calcium oxide is hydrated, in the hydrating tank 18, with water obtained by the dewatering device 16 to yield calcium hydroxide, which is then returned to the absorbing tower together with calcium hydroxide thus replenishing the system.

The resulting CO₂ gas produced as a result of the decomposition of calcium bicarbonate is introduced into the reducing tower 4 together with hydrogen and, in a similar manner to Example 1, they are both reduced and recycled.

In this example, the decomposition of calcium carbonate requires a high temperature of about 900°C. Calcium hydroxide is, however, superior to calcium carbonate in being able to absorb CO₂ gas and sulfurous acid gas, thereby bringing about such advantages that the absorbing tower 10 can be reduced in size, and the recirculation velocity of the absorbing solution inside the absorbing tower can be lowered. In other words, the electric power for the recirculation pump can be reduced.

### [Example 3]

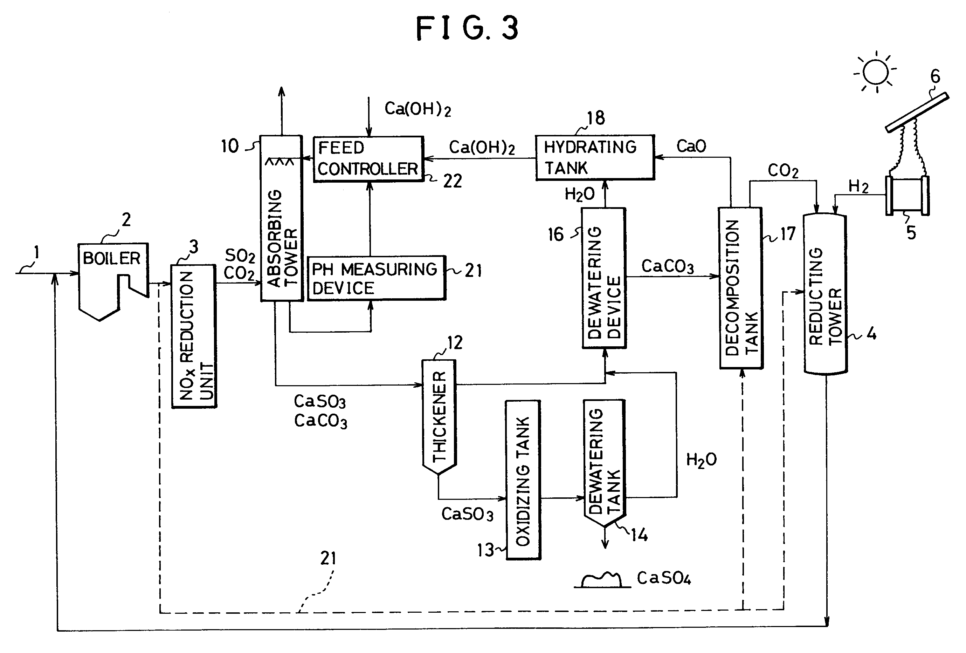

FIG. 3 is a block diagram of a CO₂ gas recycling system according to a further embodiment of the present invention. This embodiment is different from the embodiment of Example 2 in that calcium sulfite and calcium carbonate are obtained in the absorbing tower 10. In this example, the decomposition tank 15 of Example 2 is omitted so that calcium carbonate discharged from the absorbing tower 10 is fed to the dewatering device 16, while CO₂ gas is decomposed in the decomposition tank.

The operation of each sub-system of the system according to this embodiment will now be described.

In FIG. 3, flue gas containing sulfurous acid gas and CO₂ gas is brought into contact with a calcium hydroxide slurry, which is used as the absorbent, in the absorbing tower 10, whereby sulfurous acid gas and CO₂ gas are eliminated. Then, as in Example 1, the feed quantity of the absorbent is controlled to obtain from the absorbing tower 10 an absorbing solution (slurry) containing calcium sulfite and calcium carbonate. Namely, the quantity of the absorbent is controlled so that the flue gas is brought into contact with the absorbent in a quantity substantially equal to the stoichiometric quantity required to convert sulfurous acid gas and CO₂ gas, which are absorbed and removed from the flue gas, to calcium sulfite and calcium carbonate respectively. In practice, the pH of the absorbent is measured by the pH measuring device 21, and the feed quantity of the absorbent is controlled by the feed control unit 22 so that the pH of the absorbent is maintained at around at least 10.5, preferably about 12.

The absorbing solution is separated into calcium sulfite and calcium carbonate in the decomposition tank 12. The resulting calcium sulfite is, in the oxidizing tank 13, oxidized by air or the like into gypsum, which is dewatered in the dewatering tank 14 and then discharged from the system. While calcium carbonate is thermally decomposed into CO₂ gas and calcium oxide in the decomposition tank 17, after having been dewatered in the dewatering device 16. As an alternative, a gypsum-forming mother liquor may be charged as needed so that calcium carbonate is decomposed into CO₂ gas and gypsum.

Calcium oxide is hydrated, in the hydration tank 18 with water obtained from the dewatering device 16, thereby forming calcium hydroxide. The resulting calcium hydroxide is fed to the absorbing tower 10, together with calcium hydroxide thus replenishing the system.

The resulting CO₂ gas is introduced into the reducing tower 4 and, in a similar manner to Example 1, reduced and then recycled.

In this example, the decomposition of calcium carbonate requires a high temperature of about 900°C. However, a particularly high CO₂-absorbing capacity is obtained, because calcium hydroxide has an excellent CO₂ gas absorving capacity and sulfurous acid gas and, moreover, the absorbing solution can be drawn out from the absorbing tower in a state still retaining a CO₂-absorbing capacity. Accordingly, this embodiment has the advantages that the absorbing tower can be reduced in size and the recirculation velocity of the absorbing solution inside the absorbing tower can be lowered, in other words, the electric power for the recirculation pump can be reduced.

### [Example 4]

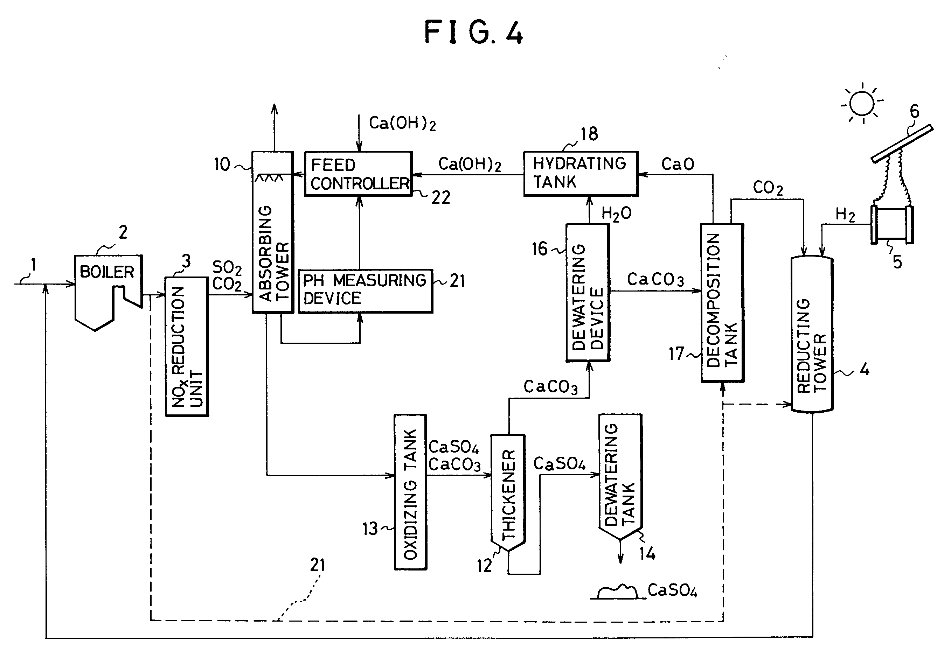

FIG. 4 is a block diagram of a CO₂ gas recycling system according to a still further embodiment of the present invention.

This example is a variation of Example 3.

In FIG.4, the system of this embodiment is similar to that of the embodiment shown in FIG.3 until an absorbing solution (slurry) containing calcium sulfite and calcium carbonate is obtained from the absorbing tower 10.

Namely, this embodiment is different from that of Example 3 in that the oxidizing tank 13 is arranged before the thickener 12 in order to oxidize the absorbing solution, which contains calcium sulfite and calcium carbonate, into gypsum and calcium carbonate. This is followed by the separation of the resulting gypsum and calcium carbonate from each other and then, by the decomposition of calcium carbonate.

The operation of each sub-system in this example will now be described.

The absorbing solution (slurry) from the absorbing tower 10, containing calcium sulfite and calcium carbonate, is oxidized in the oxidizing tank 13 into gypsum and calcium carbonate. This is followed by their mutual separation in the thickener 12. Gypsum is discharged from the system after having been dewatered by the dewatering tank 14. Calcium carbonate is dewatered by the dewatering device 16, and is then thermally decomposition into CO₂ gas and calcium oxide in the decomposition tank 17. As an alternative, a gypsum-forming mother liquid may be charged as needed so that calcium carbonate can be decomposed into CO₂ gas and gypsum.

Calcium oxide is hydrated, in the hydration tank 18, with water obtained by the dewatering device 16 in order to form calcium hydroxide, which is then fed to the absorbing tower 10 together with calcium hydroxide, thus replenishing the system.

The resulting CO₂ gas is introduced into the reducing tower 4 where its reduction and recycling are conducted as in Example 1.

In this example, calcium carbonate and gypsum are separated from each other in the thickener 12. The separation of calcium sulfite and calcium carbonate by this embodiment is easier than that by the embodiment of Example 3, because there is a large difference in particle size between calcium carbonate and gypsum (gypsum has a much larger particle size).

### [Example 5]

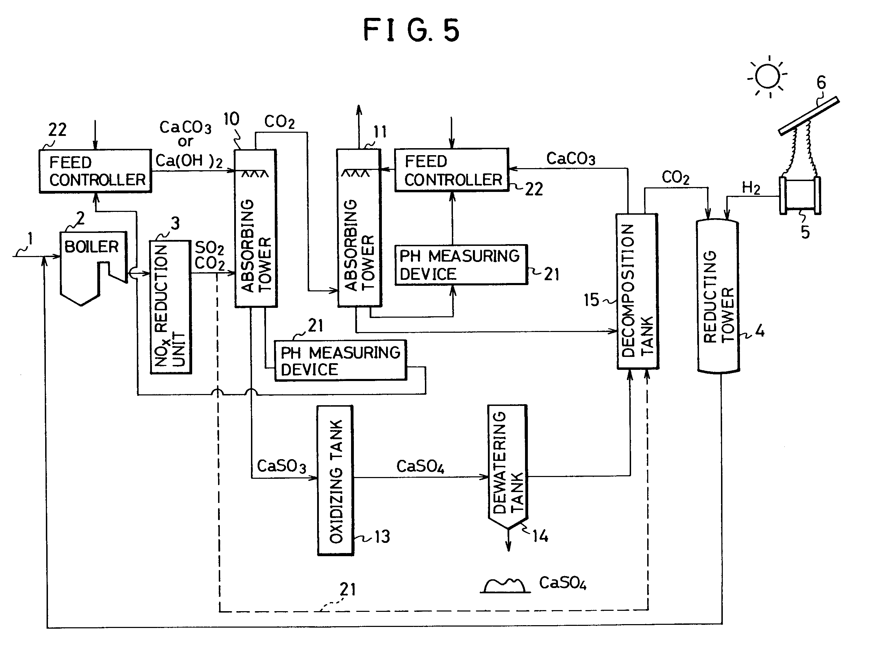

FIG. 5 is a block diagram of a CO₂ gas recycling system according to a still further embodiment of the present invention.

This embodiment has obviated the mutual separation step of the sulfite and the carbonate, which is required in each of the embodiments previously described, by employing two absorbing towers. One tower is used for the absorption of sulfurous acid gas only and the other for the absorption of CO₂ gas only. Namely, the system of this embodiment has one absorbing tower 10 for desulfurization and another absorbing tower 11 for decarbonization in the flue gas treatment sub-system thereof. After the absorbing tower 10, the oxidizing tank 13 and the dewatering tank 14 are arranged. After the absorbing tower 11, the decomposition tank 15 is disposed. The thickener 12, which is included in each of the above embodiments is omitted. Further, these absorbing towers 10 and 11 are each equipped with the pH measuring device 21 and the feed control unit 22. The remaining construction of this embodiment is similar to that of the embodiment of Example 1.

The operation of each sub-system of the system of this embodiment will hereinafter be described.

In FIG. 5, the flue gas is, in the absorbing tower 10, brought into contact with a calcium carbonate or calcium hydroxide slurry to form calcium sulfite. The flue gas is then brought into contact with a calcium carbonate slurry in the absorbing tower 11, whereby a calcium bicarbonate solution is obtained.

These substances are selectively obtained in the absorbing towers 10 and 11 by controlling the feed quantities of the absorbents. This is similar to the above described embodiments.

The calcium sulfite from the absorbing tower 11 is discharged from the system following the oxidation in the oxidizing tank 13 and the dewatering in the dewatering tank 14.

The calcium bicarbonate is decomposed into calcium carbonate and CO₂ gas in the decomposition tank 15. The former is recycled into the absorbing tower 11, while the latter is fed to the reducing tower 4.

### [Example 6]

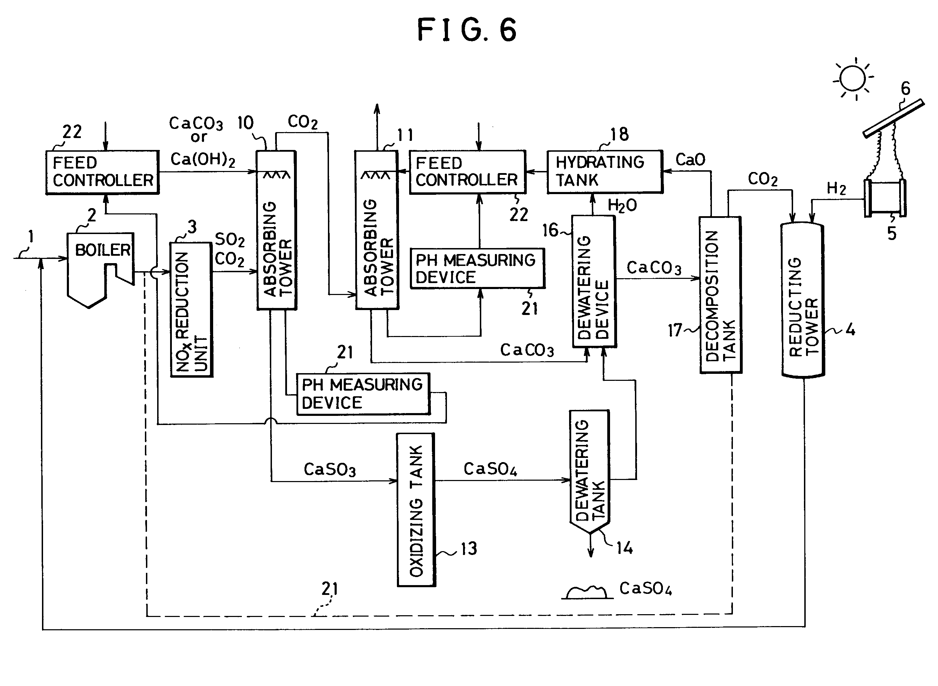

FIG. 6 is a block diagram of a CO₂ gas recycling system according to a still further embodiment of the present invention.

This example is a variation of Example 5. This embodiment has obviated the step for the mutual separation of the sulfite and the carbonate by employing two absorbing towers, one for the absorption of sulfurous acid gas alone, to form calcium sulfite and the other for the absorption of CO₂ gas alone, to form calcium carbonate. Namely, the decomposition tank 15, which is installed in Example 5, has been replaced by the dewatering device 16, the decomposition tank 17 and the hydration tank 18, as in Example 3.

The operation of each sub-system of the system according to the embodiment in this example will now be described.

In FIG. 6, the flue gas is first brought into contact with a calcium carbonate or calcium hydroxide slurry in the absorbing tower 10 in order to form calcium sulfite. The flue gas is then brought into contact with a calcium hydroxide slurry in the absorbing tower 11 in order to form a calcium carbonate solution.

These substances are selectively obtained in the absorbing towers 10 and 11 by controlling the feed quantities of the absorbents. This is similar to each embodiment described above.

The calcium sulfite from the absorbing tower 11 is discharged from the system following the oxidation in the oxidizing tank 13 and the dewatering in the dewatering tank 14.

After having been dewatered in the dewatering tank 16, calcium carbonate is thermally decomposed into CO₂ gas and calcium oxide in the decomposition tank 17. With water which has been obtained in the dewatering tank 16, the calcium oxide is hydrated into calcium hydroxide in the hydration tank 18, which is then recycled to the absorbing tower 11 with calcium hydroxide, thus replenishing the system. On the other hand, the CO₂ gas is fed to the reducing tower 4.

### [Example 7]

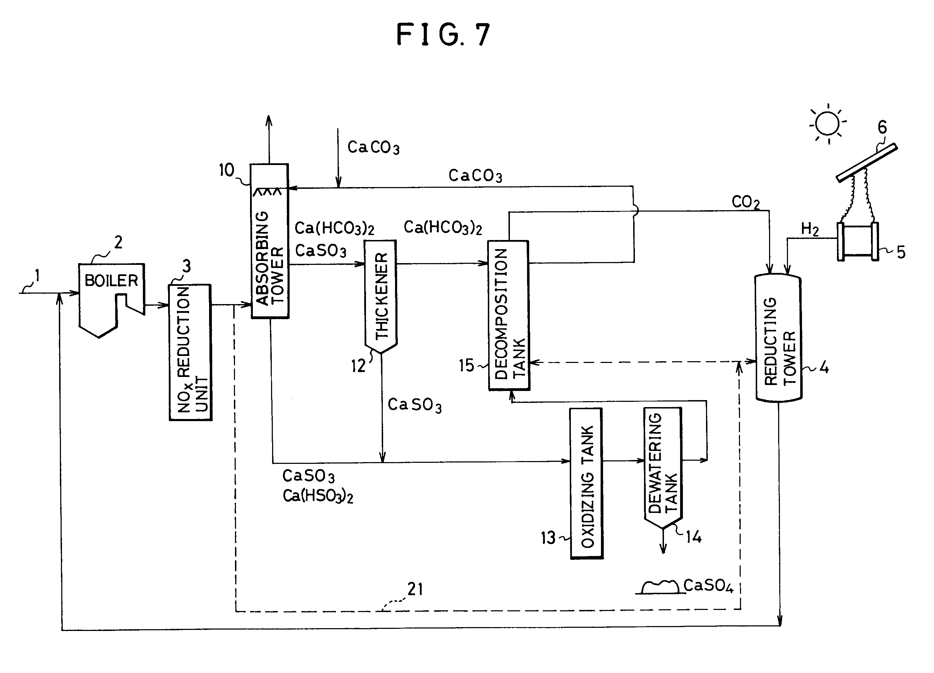

FIG. 7 is a block diagram of a CO₂ gas recycling system according to a still further embodiment of the present invention.

In this embodiment, a single absorbing tower is designed to perform both the functions of the two absorbing towers in Example 5 or 6. Namely, the flue gas treatment sub-system in this embodiment is equipped with an absorbing tower 10 constructed such that a slurry can be drawn out from both an intermediate part and a bottom part. The thickener 12 is constructed so as to receive the slurry from the intermediate part of the absorbing tower 10, while the oxidizing tank 13 is constructed so that calcium sulfite and calcium bisulfite, from the bottom part of the absorbing tower 10, as well as the thickener 12, can be oxidized there.

The operation of each sub-system of the system according to this embodiment will now be described.

A calcium carbonate slurry is fed from a top part of the absorbing tower 10 and the flue gas is introduced from a lower part thereof, whereby the absorbent and the flue gas are subjected to countercurrent contact. From the intermediate part of the absorbing tower 10, the slurry containing calcium sulfite and calcium bicarbonate and having pH 8 or so is discharged and introduced into the thickener 12. In the thickener 12, calcium sulfite and calcium bicarbonate are separated from each other. The resulting calcium sulfite, together with calcium sulfite and calcium bisulfite discharged from the bottom part, is oxidized into gypsum in the oxidizing tank 13. The calcium bicarbonate is decomposed into calcium carbonate and CO₂ gas in the decomposition tank 15.

The decomposition of calcium bicarbonate can also be conducted by optionally adding a gypsum-forming mother liquor. In this case, gypsum is formed together with CO₂ gas. The resulting gypsum is, together with calcium carbonate, fed to the absorbing tower 10 and then, along with the above gypsum formed above by the oxidation of calcium sulfite, is discharged from the system. Calcium carbonate formed in the decomposition tank 15 is, together with calcium carbonate replenished to the system, recycled to the absorbing tower 10, while the CO₂ gas is fed to the reducing tower 4.

The operation of the system according to the present invention will hereinafter be described in further detail based on one of the embodiments. Namely, an operation example of the embodiment of Example 1 illustrated in FIG.1 will be described. The other embodiments can be operated in a substantially similar manner.

### [Experiment]

The boiler 2, was charged with 29.0 kg/h of coal as fossil fuel 1, and at the same time, a recycled gas containing 12.7 vol% of methane, 47.0 vol% of hydrogen and 10.6 vol% of CO₂ gas from the reducing tower 4 was also charged. They were burned, whereby 311 Nm³/h of flue gas containing 12.89 vol% of CO₂ gas and 0.24 vol% of sulfurous acid gas were produced. The resulting flue gas was introduced into the bottom part of the absorbing tower 10 through the NOx reduction unit 3.

In the absorbing tower 10, ten perforated plates each having an opening rate of 40% were installed at varied stages. From the upper part of the tower 10, 20.0 kg/h of a recycled slurry from the decomposition tank 15, said slurry containing 6.4 wt.% of calcium carbonate, and a replenishing slurry containing 10.0 wt.% of calcium carbonate were fed as a mixture and were then brought into contact with the flue gas in a countercurrent fashion. To a slurry residence zone in the bottom part of the absorbing tower, the pH measuring device 21 was installed to measure the pH of the slurry mixture. Its output was sent to the feed control unit 21, whereby the feed quantity of the recycled slurry was controlled in association with a feed pump for the replenishing slurry to maintain the pH of the slurry mixture in the residence zone at 8.1 or higher. As a result, the feed quantity of the replenishing slurry was 0.31 kg/h.

Under the above operation conditions of the absorbing tower 10, 4.5 Nm³/h of CO₂ gas and 0.066 Nm³/h of sulfurous acid gas were absorbed, while 316 Nm³/h of the flue gas was discharged from the stack. From the bottom part of the absorbing tower 10, a slurry of pH 8.1 was discharged at the rate of 328 kg/h. It was then introduced into the thickener 12.

A solution containing 9.9 wt.% of calcium bicarbonate was discharged from an upper part of the thickener 12 at the rate of 328 kg/h and was then introduced into the decomposition tank 15. A slurry containing 64.8 wt.% of calcium sulfite was, on the other hand, drawn out from a bottom part of the thickener 12 at the rate of 0.50 kg/h and was then introduced into the oxidation tank 13, in which air was blown into the slurry to oxidize the latter into calcium sulfate (gypsum).

CaSO₃·1/2H₂O + 1/2O₂ + 3/2H₂O → CaSO₄·2H₂O

Gypsum was next discharged from the bottom part of the dewatering tank 14 at the rate of 0.51 kg/h and was then separated.

In the decomposition tank 15, calcium bicarbonate was decomposed by the heat, about 350°C, of the flue gas introduced from a point just before the NOx reduction unit 3, to cause the recovery of 4.5 Nm³/h of CO₂ gas.

Ca(HCO₃)₂ → CaCO₃ + CO₂ + H₂O

The resulting CO₂ gas was introduced into the reducing tower 4 together with 17.9 Nm³/h of hydrogen which had been produced in the water electrolyzer 5 using electricity generated from the 100 kW solar cell 6. It was brought into contact with 3 kg of a catalyst composed of nickel, lanthanum and alumina to convert the CO₂ gas to methane, whereby 18.3 Nm³/h of gas containing 12.7 vol% of methane, 47.0 vol% of hydrogen and 10.6 vol% of CO₂ gas was obtained.

The resulting gas was recirculated to the boiler 2 and was then burned together with coal. At this time, the output of a generator (not shown) was 100 kW and 316 Nm³/h of flue gas containing 35.6 Nm³/h of CO₂ gas were emitted from the stack.

### [Comparative Experiment]

When 100 kW of electricity was generated by a conventional thermal power generation system which was not equipped with any of the thickener 12, the decomposition tank 15, the water electrolyzer 5, the solar cell 6 or the reducing tower 4, the quantity of coal required was 32.2 kg/h and the flue gas emitted from the stack amounted to 282 Nm³/h. The quantity of CO₂ gas in the flue gas was 39.5 Nm³/h. Namely, the quantity of coal required and the emission of CO₂ each showed an increase of 11% .

The solar cell was employed as an energy source for the reduction sub-system in each of the above embodiments. This invention is however not limited to the use of such a solar cell. For example, the electric power may be obtained from such a solar cell during the daytime and from any surplus power from the thermal power plant at night.

## Claims

1. A method for the treatment of flue gas containing CO₂ gas and SOx gas, which comprises
- bringing the flue gas into contact with an absorbent containing an alkaline earth metal compound in order to recover the CO₂ gas and the SOx gas as the carbonate and the sulfite of the alkaline earth metal, respectively,
- controlling the feed quantity of the absorbent so as to provide a pH at which at least one of the compounds, either the carbonate or the sulfite, is present in solid form upon recovery of the carbonate and the sulfite,
- separating the carbonate of the alkaline earth metal and the sulfite of the alkaline earth metal from each other,
- decomposing the carbonate into CO₂ gas and the alkaline earth metal compound,
- reusing the alkaline earth metal compound as the absorbent and also recovering the CO₂ gas, and
- reducing the resulting CO₂ gas with hydrogen to form a CO₂ reduction product for the utilization.

2. The method of claim 1, wherein the resulting CO₂ reduction product is reused as a fuel.

3. The method of claim 1, wherein the carbonate is a bicarbonate.

4. The method according to claim 1, wherein a calcium compound is used as the absorbent.

5. The method of claim 4, wherein the calcium compound is at least one compound selected from the group consisting of calcium carbonate, calcium oxide and calcium hydroxide.

6. The method of claim 1, wherein calcium carbonate is used as the absorbent, said calcium carbonate being fed in a quantity substantially equal to the stoichiometric quantity required to convert the SOx gas to calcium sulfite and the CO₂ gas to calcium bicarbonate, thereby obtaining a mixed slurry of calcium sulfite and calcium bicarbonate.

7. The method of claim 6, wherein the pH of the mixed slurry of calcium sulfite and calcium bicarbonate falls within a range of 8-10.

8. The method of claim 1, wherein calcium hydroxide is used as the absorbent, said calcium hydroxide being fed in a quantity substantially equal to the stoichiometric quantity required to convert the SOx gas calcium sulfite and the CO₂ gas to calcium carbonate, thereby providing a mixed slurry of calcium sulfite and calcium carbonate.

9. The method of claim 8, wherein the pH of the mixed slurry of calcium sulfite and calcium carbonate is 10.5 or higher.

10. The method of claim 6, further comprising:
separating calcium sulfite and calcium bicarbonate from the mixed slurry of calcium sulfite and calcium bicarbonate;
oxidizing the calcium sulfite into gypsum;
subjecting the calcium bicarbonate to thermal decomposition to form CO₂ gas and calcium carbonate; and
utilizing the resultant calcium carbonate as the absorbent.

11. The method of claim 8, further comprising:
separating calcium sulfite and calcium carbonate from the mixed slurry of calcium sulfite and calcium carbonate;
oxidizing the calcium sulfite into gypsum;
decomposing the calcium carbonate into calcium oxide and CO₂ gas;
subjecting the calcium oxide to hydration to obtain calcium hydroxide; and
utilizing the resultant calcium hydroxide as the absorbent.

12. The method of claim 8, further comprising:
oxidizing the mixed slurry of calcium sulfite and calcium carbonate to obtain a slurry of gypsum and calcium carbonate;
separating the calcium carbonate and the gypsum from each other;
decomposing calcium carbonate into calcium oxide and CO₂ gas;
subjecting the calcium oxide to hydration to obtain calcium hydroxide; and
utilizing the calcium hydroxide as the absorbent.

13. A recycling apparatus for the regeneration of CO₂ gas, which comprises:
- means for bringing flue gas, which contains CO₂ gas and SOx gas, into contact with an absorbent containing an alkaline earth metal compound in order to recover the CO₂ gas and the SOx gas as the carbonate and the sulfite of said alkaline earth metal, respectively,
- means for controlling the feed quantity of the absorbent so as to provide a pH at which at least one of the compounds, either the carbonate or the sulfite, is present in solid form upon recovery of the carbonate and the sulfite,
- means for separating the carbonate of the alkaline earth metal and the sulfite of the alkaline earth metal from each other,
- means for decomposing the carbonate into CO₂ gas and the alkaline earth metal compound,
- means for reusing the alkaline earth metal compound as the absorbent and also recovering the CO₂ gas, and
- means for reducing the resulting CO₂ gas with hydrogen to form a CO₂ reduction product for the utilization.

14. The apparatus of claim 13, further comprising a boiler in which fossil fuel is burned with the resulting combustion gas being fed to the absorbing tower, said boiler using as a part of its fuel the CO₂ reduction product produced by the regeneration means.

15. The apparatus of claim 13, wherein the absorbent-feeding means comprises a device for measuring the pH of both the carbonate of the alkaline earth metal and the sulfite of the alkaline earth metal both at a discharge port of the absorbing tower and a feed control unit for adjusting the feed quantity of the absorbent.

16. The apparatus of claim 13, wherein the absorbent-feeding means controls the feed quantity of the absorbent so as to provide a pH at which at least one of the compounds, either the carbonate or the sulfite, can exist in a solid form upon recovery of the carbonate and the sulfite.

17. The apparatus of claim 13, wherein the absorbent-feeding means feeds calcium carbonate as the absorbent and the feed control unit maintains the pH of the mixed slurry of calcium sulfite and calcium bicarbonate within a range of 8-10.

18. The apparatus of claim 13, wherein the absorbent-feeding means feeds calcium hydroxide as the absorbent and the feed control unit maintains the pH of the mixed slurry of calcium sulfite and calcium carbonate slurry at 10.5 or higher.

19. The method of claim 11 or 12, further comprising a water electrolyzer as a hydrogen source, and a solar cell as an electric source, for the water electrolysis, wherein electric power supplied by the solar cell is employed during daytime and any surplus power of the thermal power plant is employed at night.

20. The apparatus of claim 13, wherein the means for recovering CO₂ gas and SOx gas is equipped with an absorbing tower for the recovery of CO₂ gas only and another absorbing tower for the recovery of SOx gas only.

21. The apparatus of claim 13, wherein the means for recovering CO₂ gas and SOx gas is provided with at least one absorbing tower, said at least one absorbing tower being constructed such that the carbonate of an alkaline earth metal is charged from a vertically-intermediate part of the tower and the sulfite of an alkaline earth metal from a bottom part of the tower.

## Patentansprüche

1. Verfahren zur Behandlung von CO₂-Gas und SOₓ-Gas enthaltendem Rauchgas, das umfaßt
- in-Kontakt-Bringen des Rauchgases mit einem einen alkalischen Erdmetallverbundstoff enthaltenden Absorptionsmittel, um das CO₂-Gas und das SOₓ-Gas jeweils als das Karbonat und das Sulfit des alkalischen Erdmetalls zurückzugewinnen,
- Steuern der Zufuhrmenge des Absorptionsmittels, um einen pH-Wert zu erzeugen, bei dem zumindest einer der Verbundstoffe, entweder das Karbonat oder das Sulfit, bei der Rückgewinnung des Karbonats und des Sulfits in fester Form vorhanden ist,
- Trennen des Karbonats des alkalischen Erdmetalls und des Sulfits des alkalischen Erdmetalls voneinander,
- Aufspalten des Karbonats in CO₂-Gas und den alkalischen Erdmetallverbundstoff,
- Wiederverwenden des alkalischen Erdmetallverbundstoffs als das Absorptionsmittel und ebenso Zurückgewinnen des CO₂-Gases, und
- Reduzieren des erzeugten CO₂-Gases mit Wasserstoff, uni ein CO₂-Reduktionsprodukt für die Verwendung zu bilden.

2. Verfahren nach Anspruch 1,
dadurch gekennzeichnet, daß
das resultierende CO₂-Reduktionsprodukt als ein Kraftstoff wiederverwendet wird.

3. Verfahren nach Anspruch 1,
dadurch gekennzeichnet, daß
das Karbonat ein Bikarbonat ist.

4. Verfahren nach Anspruch 1,
dadurch gekennzeichnet, daß
ein Calziumverbundstoff als das Absorptionsmittel verwendet wird.

5. Verfahren nach Anspruch 4,
dadurch gekennzeichnet, daß
der Calziumverbundstoff zumindest einer der aus der aus Calziumkarbonat, Calziumoxid und Calziumhydroxid bestehenden Gruppe gewählter Verbundstoffe ist.

6. Verfahren nach Anspruch 1,
dadurch gekennzeichnet, daß
Calziumkarbonat als das Absorptionsmittel verwendet wird, wobei das Calziumkarbonat in einer Menge zugeführt wird, die im wesentlichen mit der zur Umwandlung des SOₓ-Gases in Calziumsulfit und des CO₂-Gases in Calziumbikarbonat erforderlichen stöchiometrischen Menge übereinstimmt, wodurch eine gemischte Aufschlämmung aus Calziumsulfit und Calziumbikarbonat erhalten wird.

7. Verfahren nach Anspruch 6,
dadurch gekennzeichnet, daß
der pH-Wert der gemischten Aufschlämmung aus Calziumsulfit und Calziumbikarbonat in einem Bereich von 8 - 10 liegt.

8. Verfahren nach Anspruch 1,
dadurch gekennzeichnet, daß
Calziumhydroxid als das Absorptionsmittel verwendet wird, wobei das Calziumhydroxid in einer Menge zugeführt wird, die im wesentlichen mit der zur Umwandlung des SOₓ-Gases in Calziumsulfit und des CO₂-Gases in Calziumbikarbonat erforderlichen stöchiometrischen Menge übereinstimmt, wodurch eine gemischte Aufschlämmung aus Calziumsulfit und Calziumbikarbonat erhalten wird.

9. Verfahren nach Anspruch 8,
dadurch gekennzeichnet, daß
der pH-Wert der gemischten Aufschlämmung aus Calziumsulfit und Calziumbikarbonat bei 10,5 oder mehr liegt.

10. Verfahren nach Anspruch 6, das ferner umfaßt
Trennen des Calziumsulfits und des Calziumbikarbonats von der gemischten Aufschlämmung aus Calziumsulfit und Calziumbikarbonat;
Oxidieren des Calziumsulfits zu Gips;
Unterziehen des Calziumbikarbonats einer thermischen Aufspaltung zur Erzeugung von CO₂-Gas und Calziumkarbonat; und
Verwenden des resultierenden Calziumcarbonats als das Absorptionsmittel.

11. Verfahren nach Anspruch 8, das ferner umfaßt
Trennen des Calziumsulfits und des Calziumbikarbonats von der gemischten Aufschlämmung aus Calziumsulfit und Calziumbikarbonat;
Oxidieren des Calziumsulfits zu Gips;
Aufspalten des Calziumkarbonats in Calziumoxid und CO₂-Gas;
Unterziehen des Calziumoxids einer Hydration zum Erhalten von Calziumhydroxid; und Verwenden des resultierenden Calziumhydroxids als das Absorptionsmittel.

12. Verfahren nach Anspruch 8, das ferner umfaßt
Oxidieren der gemischten Aufschlämmung aus Calziumsulfit und Calziumkarbonat zum Erhalten einer Aufschlämmung aus Gips und Calziumkarbonat;
Trennen des Calziumkarbonats und des Gipses voneinander;
Aufspalten des Calziumkarbonats in Calziumoxid und CO₂-Gas;
Unterziehen des Calziumoxids einer Hydration zum Erhalten von Calziumhydroxid; und Verwenden des Calziumhydroxids als das Absorptionsmittel.

13. Recyclingvorrichtung zur Wiedergewinnung von CO₂-Gas, mit:
- einer Einrichtung, um CO₂-Gas und SOₓ-Gas enthaltendes Rauchgas mit einem einen alkalischen Erdmetallverbundstoff enthaltenden Absorptionsmittel in Kontakt zu bringen, um das CO₂-Gas und das SOₓ-Gas jeweils als das Karbonat und das Sulfit des alkalischen Erdmetalls zurückzugewinnen,
- einer Einrichtung zum Steuern der Zufuhrmenge des Absorptionsmittels, um einen pH-Wert zu erzeugen, bei dem zumindest einer der Verbundstoffe, entweder das Karbonat oder das Sulfit, bei der Rückgewinnung des Karbonats und des Sulfits in fester Form vorhanden ist,
- einer Einrichtung zum Trennen des Karbonats des alkalischen Erdmetalls und des Sulfits des alkalischen Erdmetalls voneinander,
- einer Einrichtung zum Aufspalten des Karbonats in CO₂-Gas und den alkalischen Erdmetallverbundstoff,
- einer Einrichtung zum Wiederverwenden des alkalischen Erdmetallverbundstoffs als das Absorptionsmittel und ebenso zum Zurückgewinnen des CO₂-Gases, und
- einer Einrichtung zum Reduzieren des resultierenden CO₂-Gases mit Wasserstoff, um ein CO₂-Reduktionsprodukt für die Verwendung zu bilden.

14. Vorrichtung nach Anspruch 13, ferner mit einem Kessel, in dem fossiler Kraftstoff verbrannt wird, wobei das resultierende Verbrennungsgas dem Absorptionsturm zugeführt wird und der Kessel als einen Teil seines Kraftstoffs das durch die Wiedergewinnungseinrichtung erzeugte CO₂-Reduktionsprodukt verwendet.

15. Vorrichtung nach Anspruch 13,
dadurch gekennzeichnet, daß
die Absorptionsmittel-Zufuhreinrichtung eine Vorrichtung zum Messen des pH-Wertes sowohl des Karbonats des alkalischen Erdmetalls als auch des Sulfits des alkalischen Erdmetalls jeweils an einer Ausgabeöffnung des Absorptionsturms und eine Zufuhrsteuereinheit zum Einstellen der Zufuhrmenge des Absorptionsmittels umfaßt.

16. Vorrichtung nach Anspruch 13,
dadurch gekennzeichnet, daß
die Absorptionsmittel-Zufuhreinrichtung die Zufuhrmenge des Absorptionsmittels steuert, um einen pH-Wert zu erzeugen, bei dem bei der Wiedergewinnung des Karbonats und des Sulfits zumindest einer der Verbundstoffe, entweder das Karbonat oder das Sulfit, in einer festen Form existieren kann.

17. Vorrichtung nach Anspruch 13,
dadurch gekennzeichnet, daß
die Absorptionsmittel-Zufuhreinrichtung Calziumkarbonat als das Absorptionsmittel zuführt und die Zufuhrsteuereinheit den pH-Wert der gemischten Aufschlämmung aus Calziumsulfit und Calziumbikarbonat in einem Bereich von 8 - 10 hält.

18. Vorrichtung nach Anspruch 13,
dadurch gekennzeichnet, daß
die Absorptionsmittel-Zufuhreinrichtung Calziumhydroxid als das Absorptionsmittel zuführt und die Zufuhrsteuereinheit den pH-Wert der gemischten Aufschlämmung aus Calziumsulfit und Calziumkarbonat auf 10,5 oder mehr hält.

19. Verfahren nach Anspruch 11 oder 12, das ferner eine Wasserelektrolyseeinrichtung als Wasserstoffquelle und eine Solarzelle als Elektrizitätsquelle für die Wasserelektrolyse umfaßt, wobei die von der Solarzelle zugeführte elektrische Energie während des Tages und jede überschüssige Energie des Wärmekraftwerks bei Nacht verwendet wird.

20. Vorrichtung nach Anspruch 13,
dadurch gekennzeichnet, daß
die Einrichtung zur Wiedergewinnung von CO₂-Gas und SOₓ-Gas mit einem Absorptionsturm zur Wiedergewinnung lediglich von CO₂-Gas und einem weiteren Absorptionsturm zur Wiedergewinnung lediglich von SOₓ-Gas ausgestattet ist.

21. Vorrichtung nach Anspruch 13,
dadurch gekennzeichnet, daß
die Einrichtung zur Wiedergewinnung von CO₂-Gas und SOₓ-Gas zumindest einen Absorptionsturm aufweist, wobei der mindestens eine Absorptionsturm derart aufgebaut ist, daß das Karbonat eines alkalischen Erdmetalls von einem vertikalen Zwischenteil des Turms und das Sulfit eines alkalischen Erdmetalls von einen, Bodenteil des Turms eingefüllt wird.

## Revendications

1. Procédé pour le traitement de gaz de fumées contenant du gaz CO2 et du gaz SOx, comprenant les opérations consistant à
- amener les gaz de fumées en contact avec un agent absorbant contenant un composé de métal alcalino-terreux pour récupérer le gaz CO2 et le gaz SOx respectivement sous la forme de carbonate et de sulfite du métal alcalino-terreux,
- commander la quantité amenée de l'agent absorbant de manière à obtenir un pH, pour lequel au moins l'un des constituants, soit le carbonate, soit le sulfite, est présent sous forme solide lors de la récupération du carbonate et du sulfite,
- séparer le carbonate du métal alcalino-terreux et le sulfite du métal alcalino-terreux l'un par rapport à l'autre,
- décomposer le carbonate en gaz CO2 et en le composé du métal alcalino-terreux,
- réutiliser le composé du métal alcalino-terreux en tant qu'agent absorbant et récupérer également le gaz CO2, et
- réduire le gaz CO2 résultant avec de l'hydrogène pour former un produit de réduction de CO2 pour l'utilisation.

2. Procédé selon la revendication 1, dans lequel le produit de réduction de CO2 est réutilisé en tant que combustible.

3. Procédé selon la revendication 1, dans lequel le carbonate est un bicarbonate.

4. Procédé selon la revendication 1, dans lequel on utilise un composé de calcium en tant qu'agent absorbant.

5. Procédé selon la revendication 4, dans lequel le composé de calcium est au moins un composé choisi dans le groupe comprenant le carbonate de calcium, l'oxyde de calcium et l'hydroxyde de calcium.

6. Procédé selon la revendication 1, dans lequel le carbonate de calcium est utilisé en tant qu'agent absorbant, ledit carbonate de calcium étant envoyé en une quantité sensiblement égale à la quantité stoechiométrique nécessaire pour convertir le gaz SOx en sulfite de calcium et le gaz CO2 en carbonate de calcium, ce qui permet d'obtenir une boue mélangée de sulfite de calcium et de carbonate de calcium.

7. Procédé selon la revendication 6, dans lequel le pH de la boue mélangée de sulfite de calcium et du bicarbonate de calcium se situe dans une gamme de 8-10.

8. Procédé selon la revendication 1, dans lequel l'hydroxyde de calcium est utilisé en tant qu'agent absorbant, ledit oxyde de calcium étant envoyé en une quantité sensiblement égale à la quantité stoechiométrique requise pour convertir le gaz SOx en sulfite de calcium et le gaz CO2 en carbonate de calcium, ce qui permet d'obtenir une boue mélangée de sulfite de calcium et de carbonate de calcium.

9. Procédé selon la revendication 8, dans lequel le pH de la boue mélangée de sulfite de calcium et de carbonate de calcium est égal à 10,5 ou plus.

10. Procédé selon la revendication 6, comprenant en outre les opérations consistant à :
séparer le sulfite de calcium et le bicarbonate de calcium à partir de la boue mélangée de sulfite de calcium et de bicarbonate de calcium;
oxyder le sulfite de calcium en gypse;
soumettre le bicarbonate de calcium à une décomposition thermique pour former du gaz CO2 et du carbonate de calcium; et
utiliser le carbonate de calcium résultant en tant qu'agent absorbant.

11. Procédé selon la revendication 8, comprenant en outre les opérations consistant à :
séparer le sulfite de calcium et le carbonate de calcium à partir de la boue mélangée de sulfite de calcium et de carbonate de calcium;
oxyder le sulfite de calcium en gypse;
décomposer le carbonate de calcium en oxyde de calcium et en gaz CO2; et
utiliser l'hydroxyde de calcium résultant en tant qu'agent absorbant.

12. Procédé selon la revendication 8, comprenant en outre les opérations consistant à :
oxyder la boue mélangée de sulfite de calcium et de carbonate de calcium pour obtenir une boue de gypse et de carbonate de calcium;
séparer le carbonate de calcium et le gypse l'un de l'autre;
décomposer le carbonate de calcium en oxyde de calcium et en gaz CO2;
hydrater l'oxyde de calcium pour l'obtention d'hydroxyde de calcium; et
utiliser l'hydroxyde de calcium en tant qu'agent absorbant.

13. Dispositif de recyclage pour la régénération de gaz CO2, qui comprend :
- des moyens pour amener des gaz de fumées en contact avec un agent absorbant contenant un composé de métal alcalino-terreux pour récupérer le gaz CO2 et le gaz SOx respectivement sous la forme de carbonate et de sulfite dudit métal alcalino-terreux,
- des moyens pour commander la quantité amenée de l'agent absorbant de manière à obtenir un pH, pour lequel au moins l'un des constituants, soit le carbonate, soit le sulfite, est présent sous forme solide lors de la récupération du carbonate et du sulfite,
- des moyens pour séparer le carbonate du métal alcalino-terreux et le sulfite du métal alcalino-terreux l'un par rapport à l'autre,
- des moyens pour décomposer le carbonate en gaz CO2 et en le composé du métal alcalino-terreux,
- des moyens pour réutiliser le composé du métal alcalino-terreux en tant qu'agent absorbant et récupérer également le gaz CO2, et
- des moyens pour réduire le gaz CO2 résultant avec de l'hydrogène pour former un produit de réduction de CO2 pour l'utilisation.

14. Dispositif selon la revendication 13, comportant en outre une chaudière, dans laquelle un combustible fossile est brûlé, le gaz de combustion résultant étant envoyé à la tour d'absorption, ladite chaudière utilisant, en tant que partie de son combustible, le produit de réduction de CO2 produit par les moyens de régénération.

15. Dispositif selon la revendication 13, dans lequel les moyens d'amenée de l'agent absorbant comprennent un dispositif pour mesurer le pH à la fois du carbonate du métal alcalino-terreux et du sulfite du métal alcalino-terreux à la fois au niveau d'un orifice d'évacuation de la tour d'absorption et d'une unité de commande d'amenée pour régler la quantité amenée de l'agent absorbant.

16. Dispositif selon la revendication 13, dans lequel les moyens d'amenée de l'agent absorbant commandent la quantité amenée de l'agent absorbant de manière à obtenir un pH pour lequel au moins l'un des composants, soit le carbonate, soit le sulfite, peut exister sous forme solide lors de la récupération du carbonate et du sulfite.

17. Dispositif selon la revendication 13, dans lequel les moyens d'amenée de l'agent absorbant envoient du carbonate de calcium en tant qu'agent absorbant, et l'unité de commande d'amenée maintient le pH de la boue mélangée de sulfite de calcium et de bicarbonate de calcium dans une gamme de 8-10.

18. Dispositif selon la revendication 13, dans lequel les moyens d'amenée de l'agent absorbant envoient de l'hydroxyde de calcium en tant qu'agent absorbant, et l'unité de commande d'amenée maintient le pH de la boue mélangée de sulfite de calcium et de carbonate de calcium à 10,5 ou plus.

19. Procédé selon la revendication 11 ou 12, comprenant en outre un dispositif d'électrolyse de l'eau en tant que source d'oxygène, et une pile solaire en tant que source électrique, pour l'électrolyse de l'eau, la puissance électrique délivrée par la pile solaire étant utilisée pendant le jour et tout surplus de puissance de l'installation de production d'énergie thermique étant utilisé la nuit.

20. Dispositif selon la revendication 13, dans lequel les moyens pour récupérer le gaz CO2 et le gaz SOx sont équipés d'lune tour d'absorption pour la récupération du gaz CO2 seul et d'une autre tour d'absorption pour la récupération du gaz SOx seul.

21. Dispositif selon la revendication 13, dans lequel les moyens de récupération du gaz CO2 et du gaz SOx comportent au moins une tour d'absorption, ladite au moins une tour d'absorption étant agencée de telle sorte que le carbonate d'un métal alcalino-terreux est chargé à partir d'une partie, située à un niveau intermédiaire verticalement, de la tour, et le sulfite d'un métal alcalino-terreux est chargé à partir d'une partie inférieure de la tour.
